(19) **Europäisches Patentamt**
**European Patent Office**
**Office européen des brevets**

(11) **EP 1 450 622 B1**

(12) **FASCICULE DE BREVET EUROPEEN**

(45) Date de publication et mention
de la délivrance du brevet:
**02.01.2013 Bulletin 2013/01**

(51) Int Cl.:
***A23K 1/175*** (2006.01)        ***A23K 1/18*** (2006.01)
***A23L 1/22*** (2006.01)

(21) Numéro de dépôt: **02793212.8**

(22) Date de dépôt: **07.11.2002**

(86) Numéro de dépôt international:
**PCT/FR2002/003820**

(87) Numéro de publication internationale:
**WO 2003/039267 (15.05.2003 Gazette 2003/20)**

(54) **FACTEUR D'APPETENCE ET EXHAUSTEUR DE GOUT**

SCHMACKHAFTIGKEITSFAKTOR UND GESCHMACKSVERSTÄRKER

APPETIZING FACTOR AND TASTE ENHANCER

(84) Etats contractants désignés:
**AT BE BG CH CY CZ DE DK EE ES FI FR GB GR
IE IT LI LU MC NL PT SE SK TR**

(30) Priorité: **07.11.2001 FR 0114387**

(43) Date de publication de la demande:
**01.09.2004 Bulletin 2004/36**

(73) Titulaire: **DIANA SAS
56250 Saint-Nolff (FR)**

(72) Inventeurs:
• **GUILLER, Isabelle
F-56370 Le Tour du Parc (FR)**
• **LE BOUQUIN, Anne-Sophie
F-56890 Saint Ave (FR)**

(74) Mandataire: **Regimbeau
20, rue de Chazelles
75847 Paris Cedex 17 (FR)**

(56) Documents cités:
**WO-A-00/30456        WO-A-92/03931
US-A- 3 930 031        US-A- 5 011 679
US-A- 5 015 485        US-A- 5 532 010**

• **DATABASE WPI Section Ch, Week 198716
Derwent Publications Ltd., London, GB; Class
D12, AN 1987-114506 XP002202497 & SU 1 253
567 A (UKR MEAT DAIRY INST), 30 août 1986
(1986-08-30)**
• **DATABASE WPI Section Ch, Week 199042
Derwent Publications Ltd., London, GB; Class
D13, AN 1990-319007 XP002202498 & SU 1 551
322 A (TADZHIKAGROPROMPROE), 23 mars
1990 (1990-03-23)**

Printed by Jouve, 75001 PARIS (FR)

**Description**

La présente invention se rapporte à un nouvel agent d'appétence pour les aliments secs ou semi-secs pour animaux domestiques, ainsi qu'à une méthode pour améliorer l'appétence de ces aliments. L'invention se rapporte également à une méthode pour augmenter et renforcer le goût des arômes et autres facteurs de goût présents dans les aliments pour animaux domestiques.

Les produits actuellement sur le marché dans le domaine de la nourriture pour animaux familiers présentent généralement des qualités nutritionnelles élevées, et peuvent se présenter sous la forme d'aliments secs, mi-secs ou humides, selon le degré d'humidité dans l'aliment.

Les aliments humides (humidité > 50 %) sont relativement coûteux à produire, et nécessitent l'utilisation d'agents de conservation, qui ne sont pas nécessaires pour les aliments secs (humidité < 15 %) ou mi-secs (15 % < humidité < 50 %). Par ailleurs les aliments présentant un fort taux d'humidité présentent généralement des qualités nutritionnelles moindres que les aliments secs ou demi-secs.

C'est pourquoi les fabriquants désirent fabriquer de tels aliments, qui posent toutefois le problème d'avoir un goût moins agréable que les aliments humides. Il est donc habituel de rajouter des arômes ou autres facteurs de goût, afin d'améliorer la consommation de ces aliments par les animaux, et notamment les chats qui sont des animaux très difficiles en ce qui concerne la nourriture. On sait notamment que l'on peut ajouter des éléments à base d'acide phosphorique à la surface des aliments.

On sait que l'addition de pyrophosphate tétrasodique permet d'améliorer l'appétence d'aliments secs ou semi-secs pour animaux familiers (WO 00/30456). Toutefois, ce produit est très hygroscopique, ce qui oblige le fabriquant à travailler dans des conditions contrôlées, lors de la préparation d'aliments secs ou semi-secs.

Il est également connu que le pyrophosphate disodique peut être utilisé comme agent d'appétence dans des aliments pour animaux domestiques (WO 92/03931). Lors de la procédure européenne, les brevetés ont produit des essais comparatifs démontrant l'inactivité du pyrophosphate trisodique en tant qu'agent d'appétence.

Les travaux de la présente invention démontrent toutefois que l'on peut utiliser du pyrophosphate trisodique dans un agent d'appétence pour aliments secs ou demi-secs pour animaux domestiques, en combinaison avec un arôme ou un facteur de goût, et que l'on observe un effet synergique entre les deux éléments.

Ainsi, la présente invention se rapporte notamment au fait que le pyrophosphate trisodique permet de mettre en valeur et renforcer les arômes et/ou facteurs de goûts présents dans les agents d'appétence destinés à être utilisés dans des aliments secs ou semi-secs pour animaux domestiques.

Le pyrophosphate trisodique de la présente invention présente donc un rôle très important d'exhausteur de goût, et est utilisé en combinaison avec un arôme ou un facteur de goût. Dans ce mode de réalisation, le pyrophosphate trisodique n'est pas lui même facteur de goût mais, en combinaison avec les arômes ajoutés, permet d'augmenter la sapidité des aliments.

Ainsi, dans un premier mode de réalisation, l'invention se rapporte à l'utilisation du pyrophosphate trisodique, en combinaison avec un arôme et/ou un facteur de goût, pour la préparation d'un agent d'appétence destiné à être utilisé dans des aliments secs ou semi-secs pour animaux domestiques. Les animaux domestiques préférés pour la mise en oeuvre de l'invention sont les chats. Le pyrophosphate trisodique permet d'améliorer la qualité de l'agent d'appétence.

Dans un mode de réalisation particulier, le pyrophosphate est présent de 5 à 90 % en poids dans ledit agent d'appétence, de préférence de 5 à 80 %, de façon plus préférée de 5 à 70 %, et après enrobage de l'aliment pour animaux familier, le pyrophosphate est présent de 0,01 à 3 % en poids de l'aliment.

L'invention se rapporte également à une méthode pour améliorer la sapidité d'un aliment sec ou semi-sec pour animaux domestiques comprenant l'étape d'application audit aliment sec ou semi-sec d'une composition comprenant du pyrophosphate trisodique en combinaison avec au moins un arôme et/ou facteur de goût.

L'invention se rapporte également à une composition (facteur d'appétence) pour améliorer la sapidité d'un aliment sec ou semi-sec pour animaux domestiques comprenant du pyrophosphate trisodique en combinaison avec au moins un arôme et/ou un facteur de goût.

Dans un mode de réalisation préféré, le pyrophosphate trisodique y est présent de 5 à 90 % en poids, de préférence de 5 à 80 %, de façon plus préférée de 5 à 70 %.

Ces compositions sont utilisées de préférence pour la mise en oeuvre des méthodes selon l'invention.

L'invention se rapporte également à une méthode pour améliorer la sapidité d'un aliment sec ou semi-sec pour les chats, comprenant l'étape d'ajouter audit aliment un facteur d'appétence selon l'invention, en quantité telle que le pyrophosphate soit présent de 0,01 à 3 % en poids de l'aliment.

Ainsi qu'il est démontré dans les exemples, le pyrophosphate trisodique permet de mettre en valeur et exhausser les arômes présents dans les aliments pour animaux domestiques et/ou dans les compositions utilisées pour améliorer l'appétence desdits aliments. Ainsi, lorsque pyrophosphate trisodique est présent en combinaison avec un arôme ou un facteur de goût, on observe une augmentation significative de la consommation des aliments, par comparaison avec les mêmes aliments en l'absence du pyrophosphate trisodique.

Ainsi, l'invention se rapporte également à l'utilisation du pyrophosphate trisodique pour mettre en valeur des arômes et/ou facteurs de goûts présents dans un agent d'appétence destiné à être utilisé dans des aliments secs ou semi-secs pour animaux domestiques, ainsi qu'à une méthode pour la mise en valeur des arômes et/ou facteurs de goûts présents dans un agent d'appétence destiné à être utilisé dans des aliments secs ou semi-secs pour animaux domestiques, comprenant l'étape d'ajouter audit agent d'appétence du pyrophosphate trisodique, de préférence à une concentration de 5 à 90 % en poids, de préférence de 5 à 80 %, de façon plus préférée de 5 à 70 %.

De même, l'invention se rapporte à l'utilisation du pyrophosphate trisodique dans un agent d'appétence destiné à être utilisé dans des aliments secs ou semi-secs pour animaux domestiques, et contenant au moins un arôme et/ou facteur de goût, pour améliorer la sapidité desdits aliments secs ou semi-secs pour animaux domestiques.

Une méthode pour améliorer la sapidité d'un aliment sec ou semi-sec pour animaux domestiques, ledit aliment comprenant un agent d'appétence comprenant au moins un arôme et/ou facteur de goût, ladite méthode comprenant l'étape d'ajouter du pyrophosphate trisodique audit agent d'appétence, de préférence à une concentration de 5 à 90 % en poids, de préférence de 5 à 80 %, de façon plus préférée de 5 à 70 %, est également un objet de l'invention.

Enfin, l'invention se rapporte à une méthode pour augmenter l'effet d'appétence d'un arôme ou facteur de goût, comprenant l'étape de combiner ledit arôme ou facteur de goût avec du pyrophosphate trisodique, de préférence à une concentration de 5 à 90 % en poids, de préférence de 5 à 80 %, de façon plus préférée de 5 à 70 %. Cet arôme ou facteur de goût est utilisé de préférence dans la fabrication d'un aliment sec ou semi-sec pour animaux domestiques, et en particulier pour les chats.

De préférence, la combinaison arôme ou facteur de goût / pyrophosphate trisodique est effectuée avant application sur un aliment sec ou semi-sec pour chats.

Dans un autre mode de réalisation toutefois, on ajoute lesdits pyrophosphate trisodique et arôme ou facteur de goût de façon séquentielle à un aliment sec ou semi-sec pour chats.

Dans les cas particuliers de mise en oeuvre de l'invention, le pyrophosphate trisodique et l'arôme sont utilisés pour des aliments secs pour chats, fabriqués par extrusion.

On applique généralement le pyrophosphate trisodique et l'arôme directement sur les aliments secs ou demi-secs, en utilisant des méthodes sèches d'application.

Ainsi, dans les modes préférés de mise en oeuvre de l'invention, on mélange une poudre de pyrophosphate trisodique à une poudre contenant au moins un arôme et/ou facteur de goût et l'on applique le mélange pulvérulent sur les aliments.

Dans un autre mode de réalisation, toutefois, on mélange du pyrophosphate trisodique à une solution liquide contenant au moins un arôme et/ou facteur de goût, et l'on enrobe les croquettes avec cette solution.

L'invention se rapporte également à l'application du pyrophosphate trisodique sur un aliment comprenant déjà un arôme et/ou facteur de goût, ou à l'application du pyrophosphate trisodique avant l'application d'un arôme et/ou facteur de goût. Ainsi, l'application des pyrophosphate trisodique et arôme/facteur de goût peut être effectuée de façon concomitante ou séquentielle.

Dans les modes classiques de mise en oeuvre de l'invention, le pyrophosphate trisodique est utilisé sur des aliments secs et demi-secs ayant une teneur en humidité environ de 50% ou moins en poids, et présentant un mélange nutritionnellement équilibré contenant des protéines, des fibres, des glucides et/ou de l'amidon.

De tels mélanges sont bien connus de l'homme du métier, et leur composition dépend de nombreux facteurs tels que, par exemple, l'équilibre alimentaire désiré pour le type spécifique d'animal de compagnie.

En plus de ces éléments de base, l'aliment peut inclure des vitamines, des minéraux, et d'autres additifs tels que des assaisonnements, des conservateurs, des émulsifiants et des agents mouillants.

L'équilibre alimentaire, y compris les proportions relatives de vitamines, de minéraux, de lipides, de protéine et d'hydrate de carbone, est déterminé selon des normes diététiques connues dans l'art vétérinaire. Par exemple, l'équilibre alimentaire de composition d'aliments pour chats est déterminé selon les conditions diététiques connues pour des chats.

On peut utiliser des aliments possédant des sources protéiques de toute sorte, notamment les protéines végétales telles que le soja ou l'arachide, les protéines animales telles que la caséine, l'albumine, et les tissus frais animaux, par exemple le tissu de viande fraîche et le tissu frais de poissons, voire des éléments secs ou rendus tels que la farine de poisson, de volaille, de viande, d'os. D'autres types de matériaux protéineux appropriés incluent le gluten de blé ou le gluten de mais, et les protéines microbiennes telles que la levure.

On utilise aussi des ingrédients contenant une proportion substantielle d'amidons ou d'hydrates de carbone, par exemple le maïs, le milo, la luzerne, le blé, l'orge, le riz, les coques de soja, et d'autres grains ayant la basse teneur en protéines.

On peut aussi rajouter, dans les aliments pouvant être utilisés dans le cadre de l'invention, d'autres ingrédients tels que le petit lait et d'autres sous-produits de laiterie, comme d'autres hydrates de carbone. En outre, des assaisonnements connus comprenant, par exemple, le sirop de maïs ou la mélasse, peuvent être ajoutés.

On peut donner par exemple une composition typique bien connue dans l'art pour une composition sèche en aliments pour chats à laquelle on applique l'agent d'appétence contenant du pyrophosphate trisodique, (en pourcentage en poids) : environ 0-70% base de céréales telle la farine (maïs, blé, orge ou riz) ; environ 0-30% sous-produit animal (volaille ou boeuf) ; environ 0-25% gluten de maïs ; environ 0-25% tissu d'animal frais, tel que le tissu de volaille ou de boeuf ; environ 0-25% farine de soja ; environ 0-10% graisse animale ; environ 0-20% base de fruits de mer ; environ 0-25% tissu frais de poissons ; environ 0-10% sirop de maïs à haute teneur en fructose ; environ 0-10% mélasse sèche ; environ 0-1,5% acide phosphorique ; et environ 0-1,5% acide citrique.

Des vitamines et minéraux peuvent être ajoutés et incluent le carbonate de calcium, le chlorure de potassium, le chlorure de sodium, le chlorure de choline, la taurine, l'oxyde de zinc, le sulfate ferreux, la vitamine E, la vitamine A, la vitamine B12, la vitamine D3, la riboflavine, la niacine, le pantothénate de calcium, la biotine, le mononitrate de thiamine, le sulfate de cuivre, l'acide folique, le chlorhydrate de pyroxidine, l'iodate de calcium, et le complexe de bisulfite de sodium de ménadione (une source d'activité de vitamine K).

On prépare généralement le pyrophosphate trisodique sous la forme de poudre. Le pyrophosphate trisodique est disponible dans le commerce sous forme sèche et en poudre et est combiné avec d'autres ingrédients secs, tels les arômes et/ou facteurs de goût.

Par « arôme et/ou facteur de goût », on entend un facteur d'appétence généralement utilisé dans l'industrie des aliments pour animaux domestiques, c'est-à-dire une composition qui, ajoutée à un aliment, augmente de manière significative la consommation de cet aliment.

Parmi les arômes et/ou facteurs de goût utilisés communément, on peut notamment citer les hydrolysats de foie de volaille tels ceux vendus par la société SPF-Diana (Elven, Morbihan, France), sous les numéros VL1009, VP2003, MP9007, obtenus par hydrolyse enzymatique de foies de volailles avec ou sans co-produit de volaille, pasteurisation et stabilisation éventuelle avec de l'acide phosphorique, du sorbate de potassium, et ajout éventuel de malodextrine si l'on désire sécher les produits.

D'autres fabricants d'arômes ou facteurs de goût existent, par exemple Bioproduct (Fairlawn, MO, Etats-Unis), ou AFB (O'Fallon, MI, Etats-Unis).

En général, les arômes ou facteurs de goût sont des produits de digestion enzymatique de volaille, complétés ou non d'extraits de levures.

En général, le facteur d'appétence est appliqué aux aliments secs ou demi-secs tels que, par exemple, les croquettes extrudées. Le facteur d'appétence peut être appliqué, par exemple, par pulvérisation ou saupoudrage sur les aliments après extrusion et séchage.

Les exemples suivants sont destinés à expliciter une certaine mise en oeuvre de l'invention et ne doivent donc pas être considérés comme limitatifs.

EXEMPLES

Exemple 1 : application du facteur d'appétence

Le facteur d'appétence est appliqué sur une croquette chat. Le procédé d'application le plus courant et utilisé par SPF est l'enrobage, dont les principales étapes sont les suivantes :

- **préparation des matières premières** (croquettes non enrobées, graisse) **et ingrédients** (acide phosphorique, facteurs d'appétence liquides et poudres) :

    - pesées des matières premières et ingrédients,
    - réchauffage de la graisse
    - réchauffage de(s) arôme(s) liquide(s)
    - mélange arôme liquide * acide phosphorique

- **enrobage** proprement dit :

    - introduction des croquettes dans l'enrobeur pilote propre (= mélangeur par fluidisation, par batch, chauffé)
    - introduction des liquides dans les réservoirs chauffés
    - démarrage du mélange
    - pulvérisation (à pression atmosphérique) sur les croquettes de la matière grasse à la dose de 6%
    - pulvérisation de l'arôme liquide à la dose de 3% ou saupoudrage sur les croquettes de la poudre à la dose de 1 %
    - arrêt du mélange
    - ensachage

- **stockage :** les croquettes sont stockées 2 semaines minimum avant d'être testées..

Exemple 2 : test d'appétence

*2.1- Principe*

Le test d'appétence est basé sur le postulat selon lequel, plus un aliment est consommé, plus il est appétent.
On réalise des tests d'appétence individuels versus (2 bols), basés sur la comparaison entre deux aliments. Un test est réalisé sur un panel de 35 chats et répété pendant 2 jours.

*2.2- Caractéristiques du panel*

Le panel SPF est composé de 35 chats à 90% de chats de race européenne, ce qui est représentatif de la population européenne.

*2.4- Mode opératoire du test:*

- pesée des aliments A et B en quantité identique et dans des bols identiques. La quantité présente dans chaque ration permet de couvrir les besoins journaliers.
- distribution des bols : les bols sont déposés dans une mangeoire individuelle accessible via une chatière.
- durée du test : 16 heures

*2.5- Paramètres étudiés*

**Paramètres mesurés :**

- $1^{er}$ aliment consommé
- quantité consommée de chaque aliment à la fin du test

**Paramètres calculés :**

- Ratio de consommation individuels en % (CR)

$$CR_A = \text{consommation de A(g)*100 / consommation de A+B (g)}$$

$$CR_B = \text{consommation de B(g)*100 / consommation de A+B (g)}$$

⇒ Ratio de consommation moyen (ACR) = moyenne des ratios individuels

*2. 6- Analyses statistiques*

L'analyse statistique permet de déterminer si il existe une différence significative entre les 2 ratios.
ACR        ⇒ Student à 3 seuils d'erreur 10%, 5% et 1 %

Exemple 3 : comparaison avec ou sans pyrophosphate trisodique, sans arôme ni facteur de goût

On saupoudre à la surface des croquettes après application de la graisse, 1 % de pyro trisodique et on compare cet aliment avec les mêmes croquettes enrobées de graisse sans pyrophosphate.
On n'observe aucune différence significative entre les 2 aliments. Conclusion : le pyrophosphate trisodique n'est pas un agent d'appétence efficace lorsqu'il est utilisé seul.

Exemple 4 : comparaison de l'appétence avec arôme, et avec ou sans pyrophosphate trisodique

*4.1. Compositions testées*

Trois formules différentes sont testées : 2 sous forme de poudre et 1 liquide:

**Liquide:** mélange appelé **XVL0070** composé de :

- hydrolysat au foie VL1009          90% en poids
- $Na_3HP_2O_7$       10%

L'hydrolysat au foie liquide VL1009 est obtenu à partir d'un mélange de co-produit de volaille et de foie de volaille qui est hydrolysé enzymatiquement puis pasteurisé à 85°C pendant 30min., stabilisé par addition d'acide phosphorique, de sorbate de K et antioxydé par du BHT. Il est disponible chez la société SPF-Diana.

Le pyrophosphate en poudre est incorporé dans ce liquide Ce liquide obtenu est enrobé sur les croquettes.

**Poudres:** mélange n°1 appelé **XVP0036** composé de:

- hydrolysat au foie en poudre VP2003          70% en poids
- $Na_3HP_2O_7$       30%

L'hydrolysat de foie en poudre VP2003 est obtenu à partir d'un hydrolysat de foie liquide (cf formule précédente) sans acide phosphorique, auquel on ajoute des maltodextrines comme support de séchage. Le liquide ainsi obtenu est séché par atomisation. Il est disponible chez la société SPF-Diana.

La poudre est mélangée au pyrophosphate triNa.

mélange n°2 appelé **X MP1004** composé de:

- hydrolysat de foie en poudre MP9007          55% en poids
- $Na_3HP_2O_7$       45%

L'hydrolysat au foie en poudre MP9007 est obtenu à partir d'un hydrolysat au foie liquide (cf formule poudre précédente) mais sans co-produit de volaille ,auquel on ajoute des maltodextrines comme support de séchage. Le liquide ainsi obtenu est séché par atomisation. Il est disponible chez la société SPF-Diana.

La poudre est mélangée au pyrophosphate triNa.

*4.2. Résultats*

Les arômes sont enrobés sur des croquettes sèches pour chats à une dose de 1% (poudres) ou 3% (liquide). Deux semaines après enrobage, les croquettes sont présentées à 35 chats dans deux gamelles différentes et les consommations de chacun des deux aliments sont quantifiées. Le traitement statistique de ces consommations est réalisé avec la méthode de Student.

|  | Produits testés | Résultats |
|---|---|---|
| **Jour** 1 | A= 3% VL1009 B= 3% XVL0070 | Ratio de consommation : 22/78 B-THS |
| **Jour 2** | A= 3% VL1009 B= 3% XVL0070 | Ratio de consommation : 16/84 B - THS |
| **Jour 1** | A= 1 % VP2003 B= 1% XVP0036 | Ratio de consommation : 35/65 B-HS |
| **Jour 2** | A= 1% VP2003 B= 1% XVP0036 | Ratio de consommation : 29/71 B - THS |
| **Jour 1** | A= 1 % MP9007 B= 1% XMP1004 | Ratio de consommation : 29/71 B-THS |

(suite)

| | Produits testés | Résultats |
|---|---|---|
| **Jour 2** | A= 1% MP9007<br>B= 1% XMP1004 | Ratio de consommation : 16/84 B-THS |

| VL1009 : hydrolysat de foie liquide ; XVL0070 : 90% VL1009 + 10% Trisodium pyrophosphate<br>VP2003: hydrolysat de foie en poudre ; XVP0036 : 70% VP2003 + 30% Trisodium pyrophosphate<br>MP9007: hydrolysat de foie en poudre; XMP1004: 55% MP9007 + 45% Trisodium pyrophosphate |
|---|

*4.3. Conclusion*

Les facteurs d'appétence contenant du pyrophosphate trisodique sont donc significativement plus appétents que les facteurs d'appétence n'en contenant pas, au risque 1% de se tromper.

Ces résultats démontrent donc que l'ajout de pyrophosphate trisodique à différents arômes/facteurs de goût dans des agents d'appétence permet d'améliorer la sapidité des aliments présentés aux chats.

**Revendications**

1.  Utilisation du pyrophosphate trisodique comme exhausteur du goût d'un arôme ou d'un facteur de goût.

2.  Méthode pour augmenter l'effet d'appétence d'un arôme ou facteur de goût, comprenant l'étape de combiner ledit arôme ou facteur de goût avec du pyrophosphate trisodique, de préférence à une concentration de 5 à 90% en poids.

3.  Méthode selon la revendication 2, dans laquelle la combinaison arôme ou facteur de goût / pyrophosphate trisodique, est effectuée avant application sur un aliment sec ou semi-sec pour chats.

4.  Méthode selon la revendication 2, dans laquelle lesdits pyrophosphate trisodique et arôme ou facteur de goût sont ajoutés de façon séquentielle à un aliment sec ou semi-sec pour chats.

5.  Utilisation du pyrophosphate trisodique pour mettre en valeur des arômes et/ou facteurs de goût présents dans un agent d'appétence destiné à être utilisé dans des aliments secs ou semi-secs pour les chats.

6.  Utilisation selon la revendication 5, **caractérisée en ce que** le pyrophosphate trisodique est présent de 5 à 90% en poids dans ledit agent d'appétence, et après enrobage de l'aliment pour chats, le pyrophosphate est présent de 0,01 à 3% en poids de l'aliment.

7.  Méthode pour mettre en valeur des arômes et/ou facteurs de goût présents dans un agent d'appétence destiné à être utilisé dans des aliments secs ou semi-secs pour les chats comprenant l'étape d'ajouter audit agent d'appétence du pyrophosphate trisodique.

8.  Méthode selon la revendication 7, dans laquelle ledit pyrophosphate est ajouté audit agent d'appétence à une concentration de 5 à 90% en poids, de préférence de 5 à 80%, de façon préférée de 5 à 70%.

9.  Méthode pour préparer un aliment sec ou semi-sec appétent pour les chats, comprenant :

    - la préparation d'un agent d'appétence en combinant du pyrophosphate trisodique avec un arôme et/ou un facteur de goût ; et
    - l'application dudit agent d'appétence à un aliment sec ou semi-sec pour les chats de manière à obtenir un aliment appétent.

10. Méthode selon la revendication 9, **caractérisée en ce que** le pyrophosphate trisodique est présent de 5 à 90% en poids dans ledit agent d'appétence, et après enrobage de l'aliment pour chats, le pyrophosphate est présent de 0,01 à 3% en poids de l'aliment.

**Claims**

1. Use of trisodium pyrophosphate as a tast enhancer for a flavouring or a taste factor.

2. Method for increasing the appetizing effect of a flavouring or taste factor, comprising the step of combining said flavouring or taste factor with trisodium pyrophosphate, preferably in a concentration from 5 to 90% by weight.

3. Method according to Claim 2, wherein the flavouring or taste factor is combined with the trisodium pyrophosphate before application to a dry or semi-dry cat food.

4. Method according to Claim 2, wherein said trisodium pyrophosphate and said flavouring or taste factor are added sequentially to a dry or semi-dry cat food.

5. Use of tetrasodium pyrophosphate to bring out flavourings and/or taste factors present in an appetizing agent intended to be used in dry or semi-dry cat foods.

6. Use according to Claim 5, **characterized in that** trisodium pyrophosphate is present in an amount from 5 to 90% by weight in said appetizing agent and, after coating the cat food, pyrophosphate is present in an amount from 0.01 to 3% by weight of the food.

7. Method for bringing out flavourings and/or taste factors present in an appetizing agent intended to be used in dry or semi-dry cat foods comprising the step of adding trisodium pyrophosphate to said appetizing agent.

8. Method according to Claim 7, wherein said pyrophosphate is added to said appetizing agent at a concentration of 5 to 90% by weight, preferably of 5 to 80%, yet preferably of 5 to 70%.

9. Method for preparing an appetizing dry or semi-dry food for cats, comprising

- the preparation of an appetizing agent by combining trisodium pyrophosphate with a flavouring and/or a taste factor; and
- the application of said appetizing agent to a dry or semi-dry food for cats so as to obtain an appetizing food.

10. Method according to Claim 9, **characterized in that** trisodium pyrophosphate is present from 5 to 90% by weight in said appetizing agent, and after coating the cat foods, pyrophosphate is present from 0.01% to 3% by weight of the food.

**Patentansprüche**

1. Verwendung von Trinatriumpyrophosphat als Geschmacksverstärker eines Aromas oder eines Geschmacksfaktors.

2. Verfahren zur Erhöhung der Appetenzwirkung eines Aromas oder eines Geschmacksfaktors, welches den Schritt des Vereinigens des Aromas oder des Geschmacksfaktors mit Trinatriumpyrophosphat, bevorzugt in einer Konzentration von 5 bis 90 Gew.-%, umfasst.

3. Verfahren gemäß Anspruch 2, wobei das Vereinigen von Aroma oder Geschmacksfaktor und Trinatriumpyrophosphat vor der Verwendung in einem Trockenfutter oder Halbtrockenfutter für Katzen erfolgt.

4. Verfahren gemäß Anspruch 2, wobei das Trinatriumpyrophosphat und das Aroma oder der Geschmacksfaktor sequentiell einem Trokkenfutter oder Halbtrockenfutter für Katzen zugegeben werden.

5. Verwendung von Trinatriumpyrophosphat zur Hervorhebung von Aromen und/oder Geschmacksfaktoren, die in einem Appetenzmittel vorliegen, das zur Verwendung in Trockenfutter oder Halbtrockenfutter für Katzen bestimmt ist.

6. Verwendung gemäß Anspruch 5, **dadurch gekennzeichnet, dass** das Trinatriumpyrophosphat mit 5 bis 90 Gew.-

% in dem Appetenzmittel vorliegt, und dass nach Umhüllung des Katzenfutters das Pyrophosphat mit 0,01 bis 3 Gew.-% in dem Futter vorliegt.

7. Verfahren zur Hervorhebung von Aromen und/oder Geschmacksfaktoren, die in einem Appetenzmittel vorliegen, das zur Verwendung in Trockenfutter oder Halbtrockenfutter für Katzen bestimmt ist, welches den Schritt der Zugabe von Trinatriumpyrophosphat zu dem Appetenzmittel umfasst.

8. Verfahren gemäß Anspruch 7, wobei das Pyrophosphat dem Appetenzmittel in einer Konzentration von 5 bis 90 Gew.-%, bevorzugt 5 bis 80 Gew.-%, bevorzugter 5 bis 70 Gew.-%, zugegeben wird.

9. Verfahren zur Herstellung eines Appetenz-Trockenfutters oder - Halbtrockenfutters für Katzen, umfassend:

   - die Herstellung eines Appetenzmittels durch Vereinigen von Trinatriumpyrophosphat mit einem Aroma und/ oder einem Geschmacks-' faktor; und
   - die Verwendung des Appetenzmittels in einem Trockenfutter oder Halbtrockenfutter für Katzen zum Erhalt eines Appetenz-Futters.

10. Verfahren gemäß Anspruch 9, **dadurch gekennzeichnet, dass** das Trinatriumpyrophosphat mit 5 bis 90 Gew.-% in dem Appetenzmittel vorliegt, und dass nach Umhüllung des Katzenfutters das Pyrophosphat mit 0,01 bis 3 Gew.-% in dem Futter vorliegt.

**RÉFÉRENCES CITÉES DANS LA DESCRIPTION**

**Documents brevets cités dans la description**

- WO 0030456 A

- WO 9203931 A